# EUROPEAN PATENT APPLICATION

(11) **EP 3 943 361 A1**
(43) Date of publication of application: **26.01.2022**
(21) Application number: 20805291.0
(22) Date of filing: 22.06.2020
(51) Int. Cl.: B61H 11/10

(54) **PARKING BRAKE CONTROL MODULE AND RAIL VEHICLE**

(30) Priority: 05.07.2019 CN 201910602162
(71) Applicant: CRRC QINGDAO SIFANG ROLLING STOCK RESEARCH INSTITUTE CO., LTD., Shibei District Qingdao Shandong 266000 (CN)
(72) Inventor: QIN, Liwei, Qingdao, Shandong 266000 (CN); LI, Peishu, Qingdao, Shandong 266000 (CN); MENG, Qingyu, Qingdao, Shandong 266000 (CN); LU, Jinchang, Qingdao, Shandong 266000 (CN); WANG, Zhen, Qingdao, Shandong 266000 (CN)
(74) Representative: J A Kemp LLP
(86) International application number: PCT/CN2020/097349
(87) International publication number: WO 2020/228842

(57) **Abstract**

The present application discloses a parking brake control module and rail vehicle, the parking brake control module includes an air inlet end, a first air inlet channel, a first air outlet channel, a second air inlet channel, a second air outlet channel and a valve body, the first air inlet channel has an air reservoir unit, the first air inlet channel is connected with a brake cylinder, the second air inlet channel is connected with the air inlet end, the second air outlet channel is connected with a parking cylinder; when the valve body is in a first working state, the valve body communicates an air reservoir chamber and the first air outlet channel, and at the same time, the valve body communicates the second air outlet channel and the atmosphere, thereby realizing applying of parking braking force; when the valve body is in a second working state, the valve body communicates the second air inlet channel and the second air outlet channel, and at the same time the valve body communicates the first air outlet channel and the atmosphere, thereby realizing release of parking brake.

## Description

### TECHNICAL FIELD

The application belongs to the technical field of rail vehicle brake, and particularly relates to a parking brake control module and a rail vehicle.

### BACKGROUND OF THE PRESENT INVENTION

At present, parking braking force for rail vehicles is applied by compressed springs, and a parking control module realizes the release and application of parking brake by controlling the presence or absence of compressed air in a parking cylinder.

Chinese utility model patent No. CN202541577U discloses a parking brake control unit for an urban rail vehicle, which includes a brake cylinder pressure control part and a parking brake cylinder pressure control part, wherein the parking brake cylinder pressure control part includes a main air pipe MR and a parking brake cylinder PB, and main air provides pressure air for the parking brake control valve and the parking brake cylinder PB after passing through a cutoff cock and an air filter. The parking brake control unit receives a signal from a control room to brake and release the parking brake cylinder PB, when the parking brake signal is turned on, the parking brake control valve exhausts pressurized air in the parking brake cylinder PB, and the parking brake cylinder PB generates parking brake action; when the parking brake signal is removed, the parking brake control valve supplies air to introduce pressurized air into the parking brake cylinder PB to release the parking brake action.

Chinese application No. CN105109474A discloses a locomotive parking brake interlocking control system, including an MCU and an interlocking pressure switch, wherein the interlocking pressure switch is used for detecting the pressure of a brake pipe and transmitting a cut-off signal or a closing signal to the MCU, and the MCU receives the cut-off signal or the closing signal transmitted by the pressure switch and allows the implementation of the parking brake or parking brake release according to the received signal. Where, an air cylinder communicates with a parking brake air pipeline to provide a stable air source for a parking brake device.

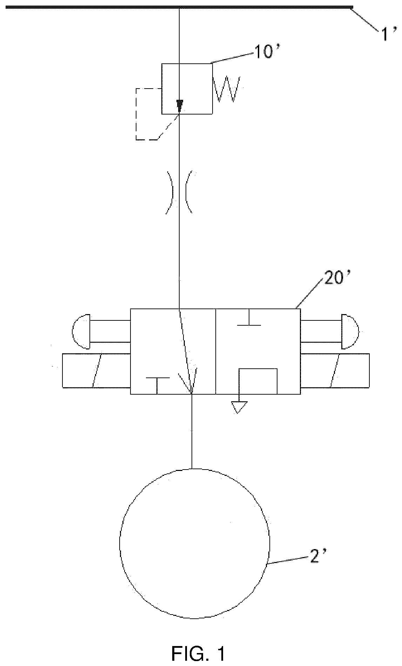

As shown in Fig. 1, the parking control module includes a pressure reducing valve 10' and a two-position three-way parking valve 20'; compressed air in a main air pipe 1', after passing through the pressure reducing valve 10', is controlled by one two-position three-way parking valve 20' which can only control the presence or absence of the compressed air in the parking cylinder 2'; under normal circumstances, the two-position three-way parking valve 20' is in a open state, the parking cylinder 2' is inflated with the compressed air to release parking brake; when a parking brake command is received, the two-position three-way parking valve 20' acts to exhaust the compressed air inside the parking cylinder 2', and the applying of the parking brake is realized through compressed springs.

The parking brake control principle of the above technology is as follows: the parking braking force is applied by the parking cylinder, the magnitude of the parking braking force applied to the rail vehicle is determined by the compressed springs in the parking cylinder 2', so that parking braking force cannot be flexibly adjusted, and proper parking braking force cannot be applied to the vehicle to ensure sufficient parking safety factor and avoid the phenomenon of wheel scratch due to excessive parking force in unexpected situations.

### SUMMARY OF THE PRESENT INVENTION

The present application provides a parking brake control module and a rail vehicle; the technical solutions are as following.

A parking brake control module, used in a rail vehicle, comprising:
an air inlet end;
a first air inlet channel, the first air inlet channel is connected with the air inlet end; the first air inlet channel has an air reservoir unit which has an air reservoir chamber and the air reservoir chamber is used for storing gas required for braking applied by a brake cylinder of the rail vehicle;
a first air outlet channel, the first air outlet channel is arranged corresponding to the first air inlet channel;
a second air inlet channel, the second air inlet channel is connected with the air inlet end;
a second air outlet channel, the second air outlet channel is arranged corresponding to the second air inlet channel;
and a valve body, the valve body is connected between the first air inlet channel and the first air outlet channel, the valve body is connected between the second air inlet channel and the second air outlet channel, the valve body has:
   a first working state, in the first working state, the valve body communicates the air reservoir chamber and the first air outlet channel, and at the same time, the valve body communicates the second air outlet channel and the atmosphere, thereby realizing applying of parking braking force;
   and a second working state, in the second working state, the valve body communicates the second air inlet channel and the second air outlet channel, and at the same time the valve body communicates the first air outlet channel and the atmosphere, thereby realizing release of parking brake.

Preferably, the air reservoir unit comprises a one-way valve and an air reservoir cylinder, the air reservoir chamber is located inside the air reservoir cylinder, the air reservoir cylinder is connected in series with the one-way valve, and the one-way valve and the air reservoir cylinder are sequentially arranged along the an air inlet direction of the first air inlet channel.

Preferably, the valve body has a pneumatic control part, the pneumatic control part is connected with the air inlet end, when an air pressure provided by the air inlet end to the pneumatic control part exceeds a preset range of the pneumatic control part, the valve body switches the working state.

Preferably, the valve body has:
a first air outlet, the first air outlet is connected with the first air inlet channel;
a second air opening, the second air opening is connected with the second air inlet channel;
a third air opening, the third air opening communicates with the atmosphere;
a fourth air opening, the fourth air opening is arranged corresponding to the first air outlet and the third air opening, the fourth air opening is connected with the first air outlet channel;
and a fifth air opening, the fifth air opening is arranged corresponding to the second air opening and the third air opening, and the fifth air opening is connected with the second air outlet channel;
when the valve body is in the first working state, the first air outlet communicates with the fourth air opening, meanwhile the fifth air opening communicates with the third air opening;
when the valve body is in the second working state, the second air opening communicates with the fifth air opening, meanwhile, the fourth air opening communicates with the third air opening.

Preferably, the valve body is a two-position five-way valve, the parking brake control module further comprises:
a first pressure reducing valve, the first pressure reducing valve is connected between the air inlet end and the first air inlet channel, the first pressure reducing valve is connected in series with both the first air inlet channel and the second air inlet channel, wherein the air output from the first pressure reducing valve flows into the first air inlet channel in one path and into the second air inlet channel in the other path;
the second air inlet channel comprises a second pressure reducing valve and a throttle valve, the throttle valve is connected between the second pressure reducing valve and the second air opening.

Preferably, the valve body is a two-position five-way valve, the parking brake control module further comprises:
a first pressure reducing valve, the first pressure reducing valve is disposed in the first air inlet channel, the air entering the first air inlet channel passes through the first pressure reducing valve, the one-way valve and the air reservoir cylinder in sequence;
the second air inlet channel comprises a second pressure reducing valve and a throttle valve, the throttle valve is connected between the second pressure reducing valve and the second air opening.

The present application further provides a rail vehicle, comprising a parking brake control module, a brake cylinder, a parking cylinder, the parking brake control module comprises:
an air inlet end;
a first air inlet channel, the first air inlet channel is connected with the air inlet end; the first air inlet channel has an air reservoir unit which has an air reservoir chamber and the air reservoir chamber is used for storing gas required for braking applied by a brake cylinder of the rail vehicle;
a first air outlet channel, the first air outlet channel is arranged corresponding to the first air inlet channel, the first air outlet channel is connected with the brake cylinder;
a second air inlet channel, the second air inlet channel is connected with the air inlet end;
a second air outlet channel, the second air outlet channel is arranged corresponding to the second air inlet channel, the second air outlet channel is connected with the parking cylinder;
and a valve body, the valve body is connected between the first air inlet channel and the first air outlet channel, the valve body is connected between the second air inlet channel and the second air outlet channel, the valve body has:
   a first working state, in the first working state, the valve body communicates the air reservoir chamber and the first air outlet channel, and at the same time, the valve body communicates the second air outlet channel and the atmosphere, thereby realizing applying of parking braking force;
   a second working state, in the second working state, the valve body communicates the second air inlet channel and the second air outlet channel, and at the same time the valve body communicates the first air outlet channel and the atmosphere, thereby realizing release of parking brake.

Preferably, the air reservoir unit comprises a one-way valve and an air reservoir cylinder, the air reservoir chamber is located inside the air reservoir cylinder, the air reservoir cylinder is connected in series with the one-way valve, and the one-way valve and the air reservoir cylinder are sequentially arranged along the an air inlet direction of the first air inlet channel.

Preferably, the valve body has a pneumatic control part, the pneumatic control part is connected with the air inlet end, when an air pressure provided by the air inlet end to the pneumatic control part exceeds a preset range of the pneumatic control part, the valve body switches the working state.

Preferably, the valve body has:
a first air outlet, the first air outlet is connected with the first air inlet channel;
a second air opening, the second air opening is connected with the second air inlet channel;
a third air opening, the third air opening communicates with the atmosphere;
a fourth air opening, the fourth air opening is arranged corresponding to the first air outlet and the third air opening, the fourth air opening is connected with the first air outlet channel;
and a fifth air opening, the fifth air opening is arranged corresponding to the second air opening and the third air opening, and the fifth air opening is connected with the second air outlet channel;
when the valve body is in the first working state, the first air outlet communicates with the fourth air opening, meanwhile the fifth air opening communicates with the third air opening;
when the valve body is in the second working state, the second air opening communicates with the fifth air opening, meanwhile, the fourth air opening communicates with the third air opening.

Preferably, the rail vehicle further comprises:
a brake air pipe, the brake air pipe is connected with the brake cylinder;
the first air outlet channel has a two-way valve, the two-way valve has:
   a sixth air opening, the sixth air opening is connected with the valve body;
   a seventh air opening, the seventh air opening is connected with a brake air pipe;
   and an eighth air opening, the eighth air opening is connected with the brake cylinder;
when an air pressure of the sixth air opening is greater than that of the seventh air opening, the brake cylinder communicates with the valve body; when the air pressure of the sixth air opening is less than that of the seventh air opening, the brake cylinder communicates with the brake air pipe.

One or more technical solutions provided in the application have the following technical effects or advantages:

The parking brake control module described in one or more embodiments of the application has two independent air channels and a valve body for adjusting the communication of the air channels, wherein one of the air channels has a first air inlet channel and a first air outlet channel, so as to reserve gas required for parking brake and provide power for parking brake by a brake cylinder; the other air channel has a second air inlet channel and a second air outlet channel, so as to provide a parking cylinder with gas required for parking release; when a rail vehicle needs to apply parking brake, the valve body is adjusted to be in a first working state, at this time, the gas stored in an air reservoir chamber is led to the brake cylinder, and at the same time the parking cylinder communicates with the atmosphere; and when the rail vehicle needs parking release, the valve body is adjusted to be in a second working state, at this time, the parking cylinder is inflated, the brake cylinder communicates with the atmosphere, and at the same time the air reservoir chamber stores the gas required for brake. Therefore, the parking brake control module provided by one or more embodiments of the application uses compressed air to drive the brake cylinder to apply parking brake, instead of using compressed springs to drive the parking brake in the prior art, and on such basis the magnitude of the parking braking force applied to the rail vehicle is determined by the compressed air, thereby achieving flexible adjustment on the parking braking force by adjusting the pressure of the compressed air.

### BRIEF DESCRIPTION OF THE DRAWINGS

Fig. 1 is a control schematic diagram of a parking control module in prior art;
Fig. 2 is a control schematic diagram of a parking control module in an embodiment of the application, in which a valve body is in a first state;
Fig. 3 is a control schematic diagram of the parking control module in Fig. 2, in which the valve body is in a second state;
Fig. 4 is a control schematic diagram of a parking control module in another embodiment of the application, in which the valve body is in a first state;
Fig. 5 is a control schematic diagram of the parking control module in Fig. 4, in which the valve body is in a second state;
in which: 1'. main air pipe; 2'. parking cylinder; 10'. pressure reducing valve; 20'. two-position three-way parking valve; 1. parking brake control module; 100. air inlet end; 200. first air inlet channel; 210. air reservoir unit; 211. one-way valve; 212. air reservoir cylinder; 220. air reservoir chamber; 300. first air outlet channel; 310. two-way valve; 311. sixth air opening; 312. seventh air opening; 313. eighth air opening; 400. second air intake air channel; 410. second pressure reducing valve; 420. throttle valve; 500. second air outlet channel; 600. valve body; 610. first air outlet; 620. second air opening; 630. third air opening; 640. fourth air opening; 650. fifth air opening; 660. pneumatic control part; 700. first pressure reducing valve; 2. brake cylinder; 3. parking cylinder; 4. main air pipe; 5. brake air pipe; 6. BCU control module.

### DETAILED DESCRIPTION OF THE PRESENT INVENTION

The following is a detailed description for the technical solutions of the present application in combination with specific implementations. However, it should be understood that, without further recitation, elements, structures and features in one implementation may be beneficially incorporated into other implementations.

In the description of the present application, it is to be understood that terms "first", "second" are merely used for descriptive purpose and should not be interpreted to indicate or imply the relative importance or implicitly indicate the number of technical features indicated. Thus, the features defined by "first" and "second" may explicitly or implicitly include one or more of the features.

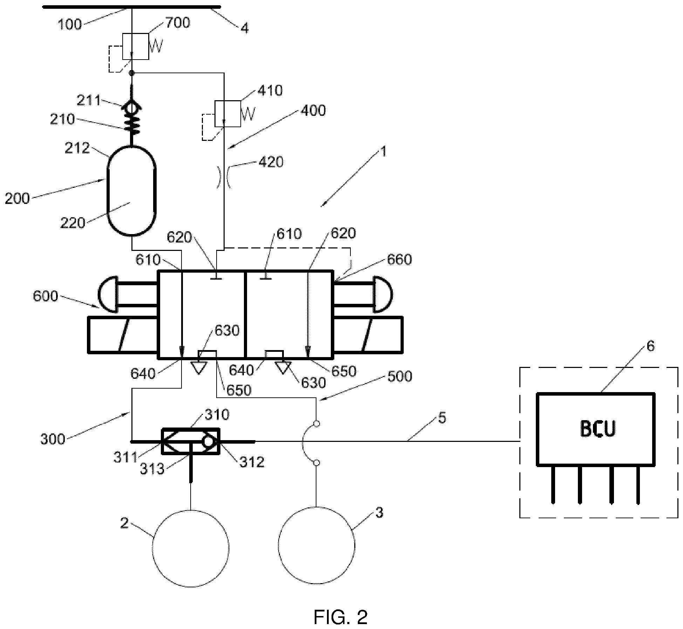

In the description of the present application, it is to be noted that the direction or positional relationships indicated by terms "upper", "lower", "bottom", "inner" and the like are based on the positional relationships in Fig. 2, these terms are merely used to facilitate the description of the present application and simplify the description, yet do not indicate or imply that the devices or elements referred must have a particular orientation, be constructed and operated in particular orientation, and therefore should not be interpreted as a limitation on this application.

In the description of the present application, it is to be noted that, unless clearly indicates otherwise, terms "connect", "connection" shall be generally understood, such as, may be fixed connection, detachable connection or integrated connection, may be directly connected, or indirectly connected through intermediate media, or inner communication of two components. For the person skilled in the art, the specific meanings of the above terms in the present application may be interpreted according to specific circumstance.

The implementations are only description for the preferred embodiments of the present application, not a limitation on the scope of the present application, without departing from the design spirit of the present application, all kinds of transformation and modification made by the person skilled in the art to the technical solution of the present application should fall within the protection scope defined by claims of the present application.

The general idea of the technical solution provided by the application is as follows: An implementation of the application provides a parking brake control module for realizing release and applying of parking brake, and a rail vehicle applying the parking brake control module. The parking brake control module is provided with two independent air channels and a valve body for adjusting communication of the air channels, wherein one of the air channels has the capability of storing gas required for parking brake, so as to provide power for parking brake of a brake cylinder, the other air channel can provide gas needed for releasing of a parking cylinder; when the rail vehicle needs to apply parking brake, the valve body is adjusted to be in a first working state, at this time, the gas stored by one of the air channels is led to the brake cylinder, and at the same time the parking cylinder communicates with the atmosphere; when the rail vehicle needs release parking brake, the valve body is adjusted to be in a second working state, at this time, the parking cylinder is inflated through the other air channel, and the brake cylinder communicates with the atmosphere, and stores the gas required for the brake at the same time.

Based on the described above, the parking brake control module provided by the implementation of the application uses compressed air to drive the brake cylinder to apply parking brake, instead of using compressed springs to apply parking brake, and on such basis the magnitude of parking braking force applied to the rail vehicle is determined by the compressed air, thereby achieving flexible adjustment on the parking braking force by adjusting the pressure of the compressed air, and obtaining proper parking braking force. Therefore, the technical problem of how to adjust the parking braking force to apply the proper parking braking force to the vehicle is solved, thereby not only ensuring a sufficient parking safety factor, but also avoiding the phenomenon of wheel scratch due to excessive parking force in unexpected situations.

In order to better understand the above-mentioned technical solution, the above-mentioned technical solution will be described in detail with reference to the attached drawings and specific embodiments. It is understood that these embodiments are only some preferred embodiments of the application and are not to be construed as limiting the scope of the application.

Referring to Figs. 2-5, an embodiment of the application provides a rail vehicle comprising a parking brake control module 1, a brake cylinder 2, a parking cylinder 3, a main air pipe 4 and a brake air pipe 5. The brake air pipe 5 can be used as an air source for service braking of the rail vehicle, and air of the brake air pipe 5 can also be provided by the main air pipe 4. The parking brake control module 1 is used in the rail vehicle, and can realize the release and applying of the parking brake. The parking brake control module 1 comprises an air inlet end 100, a first air inlet channel 200, a first air outlet channel 300, a second air inlet channel 400, a second air outlet channel 500 and a valve body 600, wherein:
the air inlet end 100 is located at an air inlet initial position of the parking brake control module 1, and the air inlet end 100 is used to communicate or connect with an external air source to serve as an input end of the air for the parking brake control module 1 and to supply air to the first air inlet channel 200 and/or the second air inlet channel 400. It can be understood that any air channel control module has an air inlet end and similarly has an air outlet end. Specifically, as shown in Fig. 2, the air inlet end 100 communicates with the main air pipe 4, and when the main air pipe 4 is an air flowing state (which can correspond to a running state of the rail vehicle at this time), the air of the main air pipe 4 is input to the parking brake control module 1 through the air inlet end 100 to supply air to the first air inlet channel 200 and/or the second air inlet channel 400.

The first air inlet channel 200 is connected with the air inlet end 100 (the first air inlet channel 200 and the air inlet end 100 can be integrally formed or connected by welding, detachable connection, etc.) to realize ventilation between the first air inlet channel 200 and the air inlet end 100. The first air inlet channel 200 has an air reservoir unit 210 which has an air reservoir chamber 220 and is used for storing gas required for braking applied by the brake cylinder 2. When the gas from the air inlet end 100 is conveyed to the first air inlet channel 200, the air reservoir chamber 220 of the air reservoir unit 210 stores gas to stably supply the stored gas to the brake cylinder 2 when the first air outlet channel 300 communicates with the brake cylinder 2, to cause the brake cylinder 2 to output parking braking force, thereby realizing parking brake. Specifically, as shown in Fig. 2, the air reservoir unit 210 comprises a one-way valve 211 and an air reservoir cylinder 212, the air reservoir chamber 220 is located inside the air reservoir cylinder 212, the air reservoir cylinder 212 is connected in series with the one-way valve 211, and the one-way valve 211 and the air reservoir cylinder 212 are sequentially arranged along an air inlet direction of the first air inlet channel 200, so that the air entering the first air inlet channel 200 first passes through the one-way valve 211 and then enters the air reservoir chamber 220 in the air reservoir cylinder 212, and at the same time the gas in the air reservoir chamber 220 is prevented from flowing back from the first air inlet channel 200. For example, when the pressure of the main air pipe 4 decreases, the one-way valve 211 can keep the pressure in the air reservoir chamber 220 from decreasing.

The first air outlet channel 300 is arranged corresponding to the first air inlet channel 200, such that when the rail vehicle needs to apply parking brake, the first air outlet channel 300 can receive the gas in the first air inlet channel 200 (for example, mainly the gas stored in the air reservoir chamber 220) and can output the gas to the brake cylinder 2 to realize parking brake, and that when the rail vehicle needs parking release, the gas in the brake cylinder 2 can be exhausted to realize parking release. It can be understood by those skilled in the art that the "air outlet" in the first air outlet channel 300 can be understood as air exhaust, that is, the first air outlet channel 300 can exhaust the gas of the first air inlet channel 200 into the brake cylinder 2 and can also exhaust the gas of the brake cylinder 2 to the atmosphere. It can also be understood by those skilled in the art that the first air outlet channel 300 and the first air inlet channel 200 can be understood as one air channel, which is called a first air channel; and that the first air channel is divided by the valve body 600, wherein the first air inlet channel 200 serves as an input part of the gas in the first air channel, the first air outlet channel 300 serves as an output or exhaust part of the gas in the first air channel, and the first air outlet channel 300 is connected with the brake cylinder 2 (the first air outlet channel 300 and the brake cylinder 2 can be detachably connected by an air channel interface or by non-detachable connection such as welding).

Specifically, as shown in Fig. 2, the first air outlet channel 300 is connected between the valve body 600 and the brake cylinder 2; when the valve body 600 selects the first air inlet channel 200 to communicate with the first air outlet channel 300, the gas of the first air inlet channel 200 is conveyed into the brake cylinder 2 through the first air outlet channel 300; in order to enable the brake cylinder 2 to play a braking role during the running of the rail vehicle, that is, in order to enable the brake cylinder 2 to output braking force in both parking brake state and service braking state of the rail vehicle, the embodiment adopts the following solution: the first air outlet channel 300 has a two-way valve 310, the two-way valve 310 has a sixth air opening 311, a seventh air opening 312 and an eighth air opening 313, the sixth air opening 311 is connected with the valve body 600 and used for receiving gas output from the valve body 600, the seventh air opening 312 is connected with a brake air pipe 5 and used for receiving gas output from the brake air pipe 5, the eighth air opening 313 is connected with the brake cylinder and used for outputting the gas output from the valve body 600 or the brake air pipe 5 to the brake cylinder, wherein when the air pressure of the sixth air opening 311 is greater than that of the seventh air opening 312, the brake cylinder 2 communicates with the valve body 600; when the air pressure of the sixth air opening 311 is less than that of the seventh air opening 312, the brake cylinder 2 communicates with the brake air pipe 5. In other words, the two-way valve 310 selects the air from the valve body 600 and the brake air pipe 5; when the rail vehicle needs service braking, the first air outlet channel 300 is not communicated and the brake air pipe 5 outputs air, at this time, with regards to the two-way valve 310, the gas pressure on the brake air pipe 5 side is greater than the gas pressure on the first air outlet channel 300 side, then the brake air pipe 5 and the brake cylinder 2 are communicated to realize the output of the braking force of the brake cylinder 2; when the rail vehicle needs parking brake, the first air outlet channel 300 is communicated, and there is no air in the brake air pipe 5, at this time, with regards to a two-way valve 310, the gas pressure on the first air outlet channel 300 side is greater than the gas pressure on the brake air pipe 5 side, the first air outlet channel 300 and the brake cylinder 2 are communicated, thereby realizing the output of parking braking force of the brake cylinder 2.

In addition, in order to better control the service braking force, with continued reference to Fig. 2, the rail vehicle in this embodiment also comprises a BCU control module 6, and the BCU control module 6 is connected with the brake air pipe 5 and used for controlling the output of gas of the brake air pipe 5, and then controlling the output of the braking force of the brake cylinder 2 according to an instruction received by the BCU control module.

The second air inlet channel 400 is connected with the air inlet end 100 (the second air inlet channel 400 and the air inlet end 100 can be integrally formed, and welded, detachably connected, etc.) to realize ventilation between the second air inlet channel 400 and the air inlet end 100, and the second air inlet channel 400 is connected with the valve body 600 and used for conveying gas received from the air inlet end 100 to the valve body 600. According to the records of the application, those skilled in the art can directly and undoubtedly conclude that the second air inlet channel 400 and the first air inlet channel 200 are belong to two independent air channels, so as to convey the gas through different air channels respectively; for example, the air at the air inlet end 100 can be divided into two channels, one passes through the first air inlet channel 200 and the other passes through the second air inlet channel 400. Specifically, as shown in Fig. 2, the second air inlet channel 400 comprises a second pressure reducing valve 410 and a throttle valve 420, the second pressure reducing valve 410 is used for outputting the gas pressure required for parking release, that is, providing the gas pressure required for parking release of the parking cylinder 3, and the throttle valve 420 is connected between the second pressure reducing valve 410 and the valve body 600, that is, in an air inlet direction along the second air inlet channel 400, the second pressure reducing valve 410 and the throttle valve 420 are arranged in sequence, and the air entering the second air inlet channel 400 passes through the second pressure reducing valve 410 and the throttle valve 420 in sequence.

The second air outlet channel 500 is arranged corresponding to the second air inlet channel 400, so that when the rail vehicle needs parking release, the second air outlet channel 500 can receive the gas in the second air inlet channel 400 and output the gas to the parking cylinder 3 to realize parking release, and when the rail vehicle needs parking brake, the gas in the parking cylinder 3 can be exhausted to provide conditions for applying the parking brake. It can be understood by those skilled in the art that the "air outlet" in the second air outlet channel 500 can be understood as air exhaust, which can exhaust the gas of the second air inlet channel 400 into the parking cylinder 3 and can also exhaust the gas of the parking cylinder 3 into the atmosphere. It can also be understood by those skilled in the art that the second air outlet channel 500 and the second air inlet channel 400 can be understood as one air channel, which is called the second air channel; and that the second air channel is divided by the valve body 600, wherein the second air inlet channel 400 serves as an input part of the gas in the second air channel, the second air outlet channel 500 serves as an output or exhaust part of the gas in the second air channel, and the second air outlet channel 500 is connected with the parking cylinder 3 (the second air outlet channel 500 and the parking cylinder 3 can be connected in a detachable connection mode by adopting an air channel interface and the like and a non-detachable connection mode by welding and the like). Specifically, as shown in Fig. 2, the second air outlet channel 500 can be only one air channel pipe, as long as it can play a role in conveying gas.

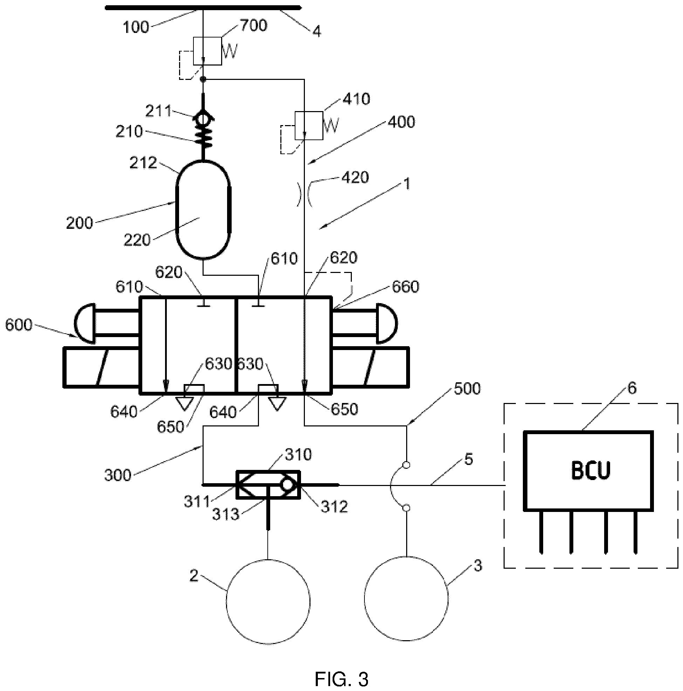

The valve body 600 is connected between the first air inlet channel 200 and the first air outlet channel 300, the valve body 600 is connected between the second air inlet channel 400 and the second air outlet channel 500, and the valve body 600 is used to select the direction of the air channels, that is, the valve body 600 has a first working state and a second working state. As shown in Fig. 2, in the first working state, the valve body 600 communicates the air reservoir chamber 220 and the first air outlet channel 300, and at the same time, the valve body 600 communicates the second air outlet channel 500 and the atmosphere, thereby realizing applying of parking braking force. As shown in Fig. 3, in the second working state, the valve body 600 communicates the second air inlet channel 400 and the second air outlet channel 500, and at the same time the valve body 600 communicates the first air outlet channel 300 and the atmosphere, thereby realizing release of the parking brake. On such a basis, those skilled in the art can be learned that the required valve body can be selected from the common technical knowledge and the prior art to meet the above requirements. Specifically, as shown in Figs. 2 and 3, the valve body 600 is preferably a two-position five-way valve, the valve body 600 has a first air outlet 610, a second air opening 620, a third air opening 630, a fourth air opening 640 and a fifth air opening 650, the first air outlet 610 is connected with the first air inlet channel 200 to receive the air of the first air inlet channel 200, the second air opening 620 is connected with the second air inlet channel 400 to receive the air of the second air inlet channel 400, the third air opening 630 communicates with the atmosphere, the fourth air opening 640 is arranged corresponding to the first air outlet 610 and the third air opening 630 to communicate with the first air outlet 610 and the third air opening 630, the fourth air opening 640 is connected with the first air outlet channel 300, the fifth air opening 650 is arranged corresponding to the second air opening 620 and the third air opening 630 to communicate with the second air opening 620 and the third air opening 630, and the fifth air opening 650 is connected with the second air outlet channel 500. As shown in Fig. 2, when the valve body 600 is in the first working state, the first air outlet 610 communicates with the fourth air opening 640, meanwhile the fifth air opening 650 communicates with the third air opening 630, at this time, the first air inlet channel 200 communicates with the first air outlet channel 300, the air in the first air inlet channel 200 enters the brake cylinder 2, and at the same time the parking cylinder 3 communicates with the atmosphere through the second air outlet channel 500, thereby realizing parking brake. As shown in Fig. 3, when the valve body 600 is in the second working state, the second air opening 620 communicates with the fifth air opening 650, meanwhile, the fourth air opening 640 communicates with the third air opening 630, at this time, the second air inlet channel 400 communicates with the second air outlet channel 500, the gas of the second air inlet channel 400 enters the parking cylinder 3, and at the same time the brake cylinder 2 communicates with the atmosphere through the first air outlet channel 300, thereby realizing parking release.

Based on the described above, the embodiments described in the application have the following technical effects or advantages:
according to the parking brake control module described in the embodiment of the application, with such arrangement that two independent air channels and a valve body for adjusting the communication of the air channels are provided, that one of the air channels (the first air channel) has a first air inlet channel 200 and a first air outlet channel 300 so as to reserve gas required for parking brake and provide power for parking brake by the brake cylinder 2, and that the other air channel (the second air channel) has a second air inlet channel 400 and a second air outlet channel 500 so as to provide the parking cylinder 3 with the gas required for parking release, when the rail vehicle needs to apply parking brake, the valve body 600 is adjusted to be in the first working state, at this time the gas stored in the air reservoir chamber 220 is led to the brake cylinder 2, and at the same time the parking cylinder 3 communicates with the atmosphere; and when the rail vehicle needs parking release, the valve body 600 is adjusted to be in the second working state, at this time the parking cylinder 3 is inflated, the brake cylinder 2 communicates with the atmosphere, and at the same time the air reservoir chamber 220 stores the gas required for braking. Therefore, the embodiment described in the application uses compressed air to drive the brake cylinder 2 to apply parking brake, instead of using compressed springs to drive the parking brake in the prior art, and on such basis the magnitude of the parking braking force applied to the rail vehicle is determined by the compressed air, thereby achieving flexible adjustment on the parking braking force by adjusting the pressure of the compressed air, and then obtaining proper parking braking force. Therefore, the technical problem of how to adjust the parking braking force to apply appropriate parking braking force to the vehicle is solved, thereby not only ensuring a sufficient parking safety factor, but also avoiding the phenomenon of wheel scratch due to excessive parking force in unexpected situations.

In addition, the parking brake control module described in the embodiment of the application also has the following technical effects: (1) since parking braking force is applied by the brake cylinder 2 driven by the compressed air, the compressed springs in the parking cylinder can be omitted, and the structure of the parking cylinder can be simplified, which will greatly reduce the weight and volume of a whole braking device, that is, the mass of springs below secondary of the rail vehicle can be reduced, and the installation space of a bogie frame can be saved; (2) since parking braking force is applied by the brake cylinder 2 driven by the compressed air, the parking braking force will not have fatigue attenuation, and the parking force can be kept consistent throughout the life cycle.

As for the control on switching the working states of the valve body 600, it can be electrical signal control (for example, the valve body 600 is a solenoid valve), pneumatic control (for example, the valve body 600 is a pneumatic control valve), or manual control, or it can be an integration of electrical signal control, pneumatic control and manual control, so that different control modes can be selected in an alternative way as required. With continued reference to Figs. 2 and 3, the valve body 600 can be controlled by air pressure, the action of the valve body 600 can be controlled by the main air pipe 4, and when the pressure of the main air pipe 4 is reduced to a set value, the valve body 600 will be caused to act, so that the parking brake control module has fault-oriented safety characteristics, which improves the system safety and the response efficiency of parking brake and parking release operations of the rail vehicle. Specifically, in Figs. 2 and 3, the valve body 600 also has a pneumatic control part 660 which is connected with the air inlet end 100, during a running process of the rail vehicle, when the air pressure provided by the air inlet end 100 to the pneumatic control part 660 (which is also the air pressure provided by the main air pipe 4 to the pneumatic control part 660) exceeds a preset range of the pneumatic control part 660 (e.g., lower than a preset value), the valve body 600 switches the working state. Specifically, when the rail vehicle runs normally, the air pressure in the main air pipe 4 is in a stable state, and the air pressure provided by the main air pipe 4 to the pneumatic control part 660 is within the preset range of the pneumatic control part 660, at this time, the pneumatic control part 660 does not work, and the switching of the working state of the valve body 600 can be controlled manually (as shown in Fig. 1 or Fig. 2, the valve bodies 600 are provided with mushroom head-shaped components for manual control) and/or electrically controlled (as shown in Fig. 1 or Fig. 2, the valve bodies 600 are provided with solenoid valves for electric control) and other conventional control methods in the art; and when the rail vehicle is in an emergency, the air pressure in the main air pipe 4 changes greatly, the air pressure provided by the main air pipe 4 to the pneumatic control part 660 is not within the preset range of the pneumatic control part 660, at this time, the pneumatic control part 660 acts to switch the valve body 600 from the second working state to the first working state to realize emergency braking, that is, to realize an emergency response in an emergency (such as unstable air pressure in the main air pipe). Generally, when an air pressure value of the main air pipe 4 is lower than the preset range, the braking force may be insufficient. Therefore, the valve body 600 usually switches its working state when the pressure of the main air pipe 4 is lower than the preset range, but it is not excluded that the valve body 600 may be set to switch its working state when the pressure of the main air pipe 4 is higher than the preset range according to other needs. Optionally, the pneumatic control part 660 is connected with the second air inlet channel 400 through a pilot valve (known to those skilled in the art), with a connection point thereof being located between the throttle valve 420 and the second air opening 620.

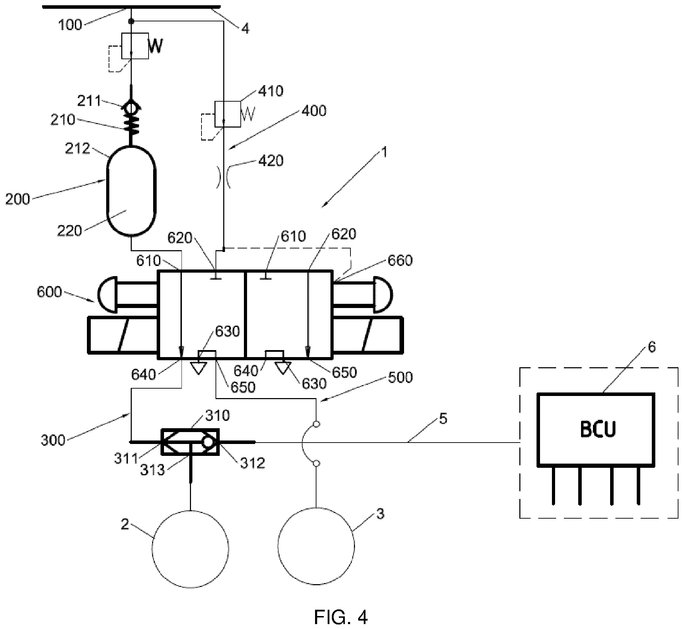

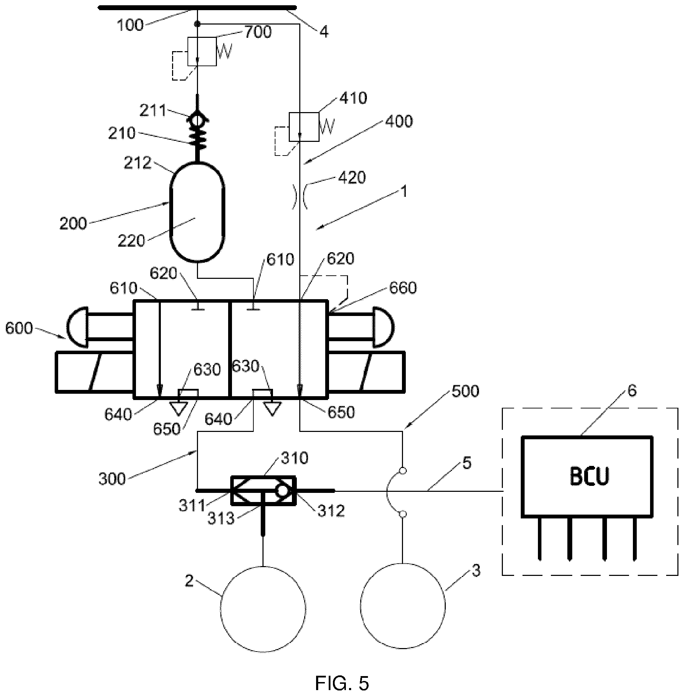

In order to provide the air reservoir chamber with the gas at required pressure, the parking brake control module 1 further comprises a first pressure reducing valve 700, the first pressure reducing valve 700 is connected between the air inlet end 100 and the first air inlet channel 200 to provide the first air inlet channel 200 (specifically, the air reservoir chamber 220) with the gas at the required pressure and further to provide the brake cylinder 2 with the air pressure required for applying parking brake, the first pressure reducing valve 700 is connected in series with both the first air inlet channel 200 and the second air inlet channel 400, wherein the air output from the first pressure reducing valve 700 flows into the first air inlet channel 200 in one path and into the second air inlet channel 400 in the other path. Of course, as shown in Figs. 4 and 5, in some other embodiments, the first pressure reducing valve 700 may also be disposed in the first air inlet channel 200, that is, the air entering the first air inlet channel 200 passes through the first pressure reducing valve 700, the one-way valve 211 and the air reservoir cylinder 212 in sequence. As shown in Figs. 4 and 5, the pressure of the first air inlet channel 200 and the second air inlet channel 400 of the parking brake control module can be completely independently controlled, and the pressure of any one of the first air inlet channel 200 and the second air inlet channel 400 can be independently set without affecting the pressure of the other, that is, different parking brake pressure and parking release pressure can be set, so that the parking brake control module has wider adaptability.

In order to illustrate the application more clearly, the operations for realizing parking brake and parking release in the application will be specifically explained by taking the embodiments shown in Figs. 2 and 3 as examples:
the air of the main air pipe 4 enters the air reservoir chamber 220 of the air reservoir cylinder 212 through the air inlet end 100, the first pressure reducing valve 700 and the one-way valve 211 in sequence, and is stored in the air reservoir chamber 220;
when the rail vehicle needs to apply parking brake, the valve body 600 is in the first working state (the state in Fig. 2), at this time, the compressed air stored in the air reservoir chamber 220 of the air reservoir cylinder 212 is introduced into the brake cylinder 2 through the first air outlet 610, the fourth air opening 640 and the first air outlet channel 300 in sequence, at the same time the second air opening 630 is closed, and the air inside the parking cylinder 3 passes through the second air outlet channel 500, the fifth air opening 650 and the third air opening 630 in sequence to be exhausted to the atmosphere, thereby realizing the application of parking brake;
when the rail vehicle needs to release parking brake, the valve body 600 is in the second working state (the state in Fig. 3), at this time, the air of the main air pipe 4 passes through the air inlet end 100, the first pressure reducing valve 700, the second pressure reducing valve 410, the throttle valve 420, the second air opening 620, the fifth air opening 650 and the second air outlet channel 500 in sequence and is introduced into the parking cylinder 3, at the same time the first air outlet 610 is closed, and the air inside the brake cylinder 2 passes through the first air outlet channel 300, the fourth air opening 640 and the third air opening 630 in sequence and is exhausted to the atmosphere, thereby realizing the release of parking brake.

## Claims

1. A parking brake control module, used in a rail vehicle, comprising:
an air inlet end;
a first air inlet channel, the first air inlet channel is connected with the air inlet end; the first air inlet channel has an air reservoir unit which has an air reservoir chamber, the air reservoir chamber is used for storing gas required for braking applied by a brake cylinder of the rail vehicle;
a first air outlet channel, the first air outlet channel is arranged corresponding to the first air inlet channel;
a second air inlet channel, the second air inlet channel is connected with the air inlet end;
a second air outlet channel, the second air outlet channel is arranged corresponding to the second air inlet channel;
and a valve body, the valve body is connected between the first air inlet channel and the first air outlet channel, the valve body is connected between the second air inlet channel and the second air outlet channel, the valve body has:
a first working state, in the first working state, the valve body communicates the air reservoir chamber and the first air outlet channel, and at the same time, the valve body communicates the second air outlet channel and the atmosphere, thereby realizing applying of parking braking force;
and a second working state, in the second working state, the valve body communicates the second air inlet channel and the second air outlet channel, and at the same time the valve body communicates the first air outlet channel and the atmosphere, thereby realizing release of parking brake.

2. The parking brake control module of claim 1, wherein the air reservoir unit comprises a one-way valve and an air reservoir cylinder, the air reservoir chamber is located inside the air reservoir cylinder, the air reservoir cylinder is connected in series with the one-way valve, and the one-way valve and the air reservoir cylinder are sequentially arranged along the an air inlet direction of the first air inlet channel.

3. The parking brake control module of claim 1, wherein the valve body has a pneumatic control part, the pneumatic control part is connected with the air inlet end, when an air pressure provided by the air inlet end to the pneumatic control part exceeds a preset range of the pneumatic control part, the valve body switches the working state.

4. The parking brake control module of any one of claims 1-3, wherein the valve body has:
a first air outlet, the first air outlet is connected with the first air inlet channel;
a second air opening, the second air opening is connected with the second air inlet channel;
a third air opening, the third air opening communicates with the atmosphere;
a fourth air opening, the fourth air opening is arranged corresponding to the first air outlet and the third air opening, the fourth air opening is connected with the first air outlet channel;
and a fifth air opening, the fifth air opening is arranged corresponding to the second air opening and the third air opening, and the fifth air opening is connected with the second air outlet channel;
when the valve body is in the first working state, the first air outlet communicates with the fourth air opening, meanwhile the fifth air opening communicates with the third air opening;
when the valve body is in the second working state, the second air opening communicates with the fifth air opening, meanwhile, the fourth air opening communicates with the third air opening.

5. The parking brake control module of claim 4, wherein the valve body is a two-position five-way valve, the parking brake control module further comprises:
a first pressure reducing valve, the first pressure reducing valve is connected between the air inlet end and the first air inlet channel, the first pressure reducing valve is connected in series with both the first air inlet channel and the second air inlet channel, wherein the air output from the first pressure reducing valve flows into the first air inlet channel in one path and into the second air inlet channel in the other path;
the second air inlet channel comprises a second pressure reducing valve and a throttle valve, the throttle valve is connected between the second pressure reducing valve and the second air opening.

6. The parking brake control module of claim 4, wherein the valve body is a two-position five-way valve, the parking brake control module further comprises:
a first pressure reducing valve, the first pressure reducing valve is disposed in the first air inlet channel, air entering the first air inlet channel passes through the first pressure reducing valve, the one-way valve and the air reservoir cylinder in sequence;
the second air inlet channel comprises a second pressure reducing valve and a throttle valve, the throttle valve is connected between the second pressure reducing valve and the second air opening.

7. A rail vehicle, comprising a parking brake control module, a brake cylinder and a parking cylinder, the parking brake control module comprises:
an air inlet end;
a first air inlet channel, the first air inlet channel is connected with the air inlet end; the first air inlet channel has an air reservoir unit which has an air reservoir chamber and the air reservoir chamber is used for storing gas required for braking applied by the brake cylinder of the rail vehicle;
a first air outlet channel, the first air outlet channel is arranged corresponding to the first air inlet channel, the first air outlet channel is connected with the brake cylinder;
a second air inlet channel, the second air inlet channel is connected with the air inlet end;
a second air outlet channel, the second air outlet channel is arranged corresponding to the second air inlet channel, the second air outlet channel is connected with the parking cylinder;
and a valve body, the valve body is connected between the first air inlet channel and the first air outlet channel, the valve body is connected between the second air inlet channel and the second air outlet channel, the valve body has:
a first working state, in the first working state, the valve body communicates the air reservoir chamber and the first air outlet channel, and at the same time, the valve body communicates the second air outlet channel and the atmosphere, thereby realizing applying of parking braking force;
a second working state, in the second working state, the valve body communicates the second air inlet channel and the second air outlet channel, and at the same time the valve body communicates the first air outlet channel and the atmosphere, thereby realizing release of parking brake.

8. The rail vehicle of claim 7, wherein the air reservoir unit comprises a one-way valve and an air reservoir cylinder, the air reservoir chamber is located inside the air reservoir cylinder, the air reservoir cylinder is connected in series with the one-way valve, and the one-way valve and the air reservoir cylinder are sequentially arranged along an air inlet direction of the first air inlet channel.

9. The rail vehicle of claim 7, wherein the valve body has a pneumatic control part, the pneumatic control part is connected with the air inlet end, when an air pressure provided by the air inlet end to the pneumatic control part exceeds a preset range of the pneumatic control part, the valve body switches the working state.

10. The rail vehicle of claim 7, wherein the valve body has:
a first air outlet, the first air outlet is connected with the first air inlet channel;
a second air opening, the second air opening is connected with the second air inlet channel;
a third air opening, the third air opening communicates with the atmosphere;
a fourth air opening, the fourth air opening is arranged corresponding to the first air outlet and the third air opening, the fourth air opening is connected with the first air outlet channel;
and a fifth air opening, the fifth air opening is arranged corresponding to the second air opening and the third air opening, and the fifth air opening is connected with the second air outlet channel;
when the valve body is in the first working state, the first air outlet communicates with the fourth air opening, meanwhile the fifth air opening communicates with the third air opening;
when the valve body is in the second working state, the second air opening communicates with the fifth air opening, meanwhile, the fourth air opening communicates with the third air opening.

11. The rail vehicle of any one of claims 7-10, wherein further comprises:
a brake air pipe, the brake air pipe is connected with the brake cylinder;
the first air outlet channel has a two-way valve, the two-way valve has:
a sixth air opening, the sixth air opening is connected with the valve body;
a seventh air opening, the seventh air opening is connected with the brake air pipe;
and an eighth air opening, the eighth air opening is connected with the brake cylinder;
when an air pressure of the sixth air opening is greater than that of the seventh air opening, the brake cylinder communicates with the valve body; when the air pressure of the sixth air opening is less than that of the seventh air opening, the brake cylinder communicates with the brake air pipe.
